# EUROPEAN PATENT APPLICATION

(11) **EP 4 841 483 A1**
(43) Date of publication of application: **18.11.2026**
(21) Application number: 25175790.2
(22) Date of filing: 12.05.2025
(51) Int. Cl.: G06F 18/25, G06V 10/74, G06V 10/82, G06V 20/56

(54) **METHOD AND SYSTEM FOR AUTONOMOUS DRIVING SCENARIO SIMILARITY SEARCH**

(71) Applicant: aiMotive Kft., 1025 Budapest (HU)
(72) Inventor: MATUSZKA, Tamás, 1063 Budapest (HU); SZOLÁR, Balázs, 7516 Berzence (HU); TAMÁSY, András, 1147 Budapest (HU)
(74) Representative: Hofmann, Matthias

(57) **Abstract**

The present disclosure provides a method for autonomous driving scenario similarity search. The method includes: obtaining multimodal data of a plurality of driving scenarios, wherein the multimodal data comprises any of video data, ego-motion data, and/or object representation data; processing the multimodal data to obtain a plurality of contextual information, wherein the plurality of contextual information comprises one or more scenario features of each of the plurality of driving scenarios; determining one or more similarity representations among the plurality of driving scenarios by comparing the plurality of contextual information; and performing the autonomous driving scenario similarity search based on the one or more similarity representations.

## Description

### TECHNICAL FIELD

The present disclosure is in the field of autonomous driving, in particular a method and system for autonomous driving scenario similarity search.

### BACKGROUND

Autonomous driving technology has been improving significantly over the years due to the continuous advancements of perception algorithms and large-scale data processing. Storing, efficiently processing, and searching huge amounts of sensory data is crucial for enhancing the development of AD and ADAS systems. One such frequently appearing use case is to find similar autonomous driving scenarios to a given interesting case. Manual searching or simple label-based filtering (e.g. based on weather, time of day, number of scenario participants) are not suitable for this purpose due to the huge search space.

### SUMMARY

In a first aspect of the present disclosure, a method for autonomous driving scenario similarity search includes: obtaining multimodal data of a plurality of driving scenarios, wherein the multimodal data includes any of video data, ego-motion data, and/or object representation data; processing the multimodal data to obtain a plurality of contextual information, wherein the plurality of contextual information includes one or more scenario features of each of the plurality of driving scenarios; determining one or more similarity representations among the plurality of driving scenarios by comparing the plurality of contextual information; and performing the autonomous driving scenario similarity search based on the one or more similarity representations.

This invention can provide a solution for autonomous driving scenario similarity search by providing algorithms and models as well as their combinations for enabling near real-time similarity search using autonomous driving scenarios containing multimodal sensory data.

In a feasible implementation of the first aspect, wherein the multimodal data includes the video data, the method may include: processing, by a transformer-based video model, the video data to obtain a plurality of first embedding vectors of the plurality of driving scenarios, wherein each of the plurality of first embedding vectors may include one or more visual spatio-temporal features of the corresponding driving scenario; and determining a first similarity representation of the plurality of driving scenarios based on the plurality of first embedding vectors.

Manual search or simple label-based filtering is insufficient for finding complex autonomous driving scenarios. However, neural networks can be used to transform videos containing spatio-temporal information into a vector representation in an efficient manner. This representation enables the utilization of vector search operations such as cosine similarity which is easy to implement and efficient to execute.

The transformer-based video model can be responsible for spatiotemporally similar scenario searches based on visual features. Visual similarity search can work well, especially in the case of simple scenarios. Ego-trajectory is also taken into account to some extents, and visual similarity may play an important role in the similarity search results.

In a feasible implementation of the first aspect, before processing the video data, the method may further include: subsampling the video data; and processing the video data to remove driving-irrelevant parts.

In a feasible implementation of the first aspect, wherein the multimodal data includes the ego-motion data, the method may include: processing the ego-motion data to obtain a plurality of ego-motion patterns of the plurality of driving scenarios, wherein the plurality of ego-motion patterns is determined according to an ego coordinate system; and determining, by a time series comparison algorithm, a second similarity representation based on the plurality of ego-motion patterns.

The method incorporates egomotion into the similarity search to consider the moving directions and velocities of the ego-vehicle. The egomotion enables the analysis of the position and orientation changes of the ego-vehicle.

In a feasible implementation of the first aspect, wherein the multimodal data includes the object representation data, the method may include: obtaining exo-trajectory data based on the object representation data; processing one or more trajectories of one or more objects in one driving scenario of the plurality of driving scenarios, wherein the one or more trajectories may be determined according to an ego coordinate system; and determining, by a trajectory matching algorithm, a third similarity representation based on the one or more trajectories.

This method enables the comparison of exo-trajectories belonging to different scenarios. Analyzing the moving patterns of other traffic participants can provide a granular similarity search method.

In a feasible implementation of the first aspect, before processing the determining the third similarity representation, the method may further include: categorizing the one or more trajectories into a set of groups based on types of the one or more objects and/or movement patterns of the one or more objects.

In a feasible implementation of the first aspect, the determining, by a trajectory matching algorithm, a third similarity representation based on the one or more trajectories may include: determining a distance matrix between each pair of the driving scenarios by comparing trajectories of objects, in the same group, of the pair driving scenarios, wherein the pair driving scenarios may be any two driving scenarios of the plurality of driving scenarios; determining, by a trajectory matching algorithm, an optimal matching of the pair driving scenarios based on the distance matrix; calculating a similarity score between the pair driving scenarios based on the optimal matching; and determining the third similarity representation based on the similarity scores of all pair driving scenarios of the plurality of driving scenarios.

In a feasible implementation of the first aspect, the method may further include: introducing a penalty mapping to refine the optimal matching on a per-class basis.

In a feasible implementation of the first aspect, wherein the multimodal data includes the object representation data, the method may include: processing, by a transformer model, the object representation data to obtain a plurality of second embedding vectors of the plurality of driving scenarios, wherein the transformer model may be trained by a contrastive learning method; and determining a fourth similarity representation of the plurality of driving scenarios based on the plurality of second embedding vectors.

While the exotrajectory-based similarity search method provides an explainable solution for comparing autonomous driving scenarios, its high computation intensity might hinder large-scale deployment. Therefore, we developed a data-driven solution that enables a computationally less intensive precomputation method and allows fast querying.

In a feasible implementation of the first aspect, the processing, by a transformer model, the object representation data to obtain a plurality of second embedding vectors of the plurality of driving scenarios may include: obtaining a plurality of tensors based on the object representation data of any driving scenario, wherein a tensor may represent trajectories of objects in the corresponding driving scenario; projecting, by a linear layer of the transformer model, the plurality of tensors into a high-dimensional embedding space to obtain a plurality of high-dimensional tensors; adding positional encoding to the plurality of high-dimensional tensors within transformer layers of the transformer model; and producing, by the transformer model, a plurality of second embedding vectors of the plurality of driving scenarios based on the plurality of high-dimensional tensors with positional encoding.

In a feasible implementation of the first aspect, the obtaining one or more tensors based on the object representation data of any driving scenario may include: processing, by a birds-eye-view, BEV, projection method, the object representation data before obtaining the one or more tensors.

In a feasible implementation of the first aspect, the training the transformer model by the contrastive learning method may include: obtaining a plurality of original training tensors of a plurality of original training driving scenarios based on training multimodal data; generating a plurality of augmented training driving scenarios by augmenting the plurality of original training tensors; determining positive pairs and negatives pairs, wherein the positive pairs may be one original training driving scenario and its corresponding augmented training driving scenarios, and the negative pairs is the original training driving scenario with any other training driving scenario; and training the transformer model by maximizing similarity within the positive pairs and minimizing similarity within the negative pairs.

In a feasible implementation of the first aspect, the plurality of driving scenarios may be obtained from one or more sensors and/or a scenario editor.

In a feasible implementation of the first aspect, wherein more than one similarity representations are determined, and the method may further include: combining the more than one similarity representations to obtain a fifth similarity representation; and performing the autonomous driving scenario similarity search based on the fifth similarity representation. Such combination can form an improved/ensembled model increasing search accuracy.

In a second aspect of the present disclosure, a system for autonomous driving scenario similarity search includes: a data obtaining module configured to obtain multimodal data of a plurality of driving scenarios, wherein the multimodal data includes any of video data, ego-motion data, and/or object representation data; a data processing module configured to process the multimodal data to obtain a plurality of contextual information, wherein the plurality of contextual information includes one or more scenario features of each of the plurality of driving scenarios; a similarity measure module configured to determine one or more similarity representations among the plurality of driving scenarios by comparing the plurality of contextual information; and a similarity search module configured to perform the autonomous driving scenario similarity search based on the one or more similarity representations.

These and other features, aspects, and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

The present disclosure is further described in terms of exemplary embodiments. These exemplary embodiments are described in detail with reference to the drawings. The drawings are not drawn to scale. These embodiments are non-limiting exemplary embodiments, in which like reference numerals represent similar structures throughout the several views of the drawings, and wherein:
FIG. 1 is a flowchart illustrating an exemplary process 100 for the autonomous driving scenario similarity search according to some embodiments of the present disclosure.
FIG. 2 is a flowchart illustrating an exemplary process 200 for the autonomous driving scenario video-based similarity search according to some embodiments of the present disclosure.
FIG. 3a to 3c are schematic diagrams of transformer models for video classification (ViVIT) according to some embodiments of the present disclosure.
FIG. 4a to 4d are exemplary images illustrating search results of the autonomous driving scenario video-based similarity search according to some embodiments of the present disclosure.
FIG. 5 is a flowchart illustrating an exemplary process 300 for the autonomous driving scenario egomotion-based similarity search according to some embodiments of the present disclosure.
FIG. 6 is a graph illustrating an exemplary concept for Dynamic Time Warping (DTW) according to some embodiments of the present disclosure.
FIG. 7a to 7c are exemplary images illustrating search results of the autonomous driving scenario egomotion-based similarity search according to some embodiments of the present disclosure.
FIG. 8 is a flowchart illustrating an exemplary process 400 for the autonomous driving scenario exo-trajectory-based similarity search according to some embodiments of the present disclosure.
FIG. 9 is a graph illustrating exemplary output of the exo-trajectory-based similarity search method.
FIG. 10 is a flowchart illustrating an exemplary process 500 for the autonomous driving scenario transformer-based similarity search according to some embodiments of the present disclosure.
FIG. 11 is a graph illustrating an exemplary concept for Contrastive Learning according to some embodiments of the present disclosure.
FIG. 12a to 12c are exemplary images illustrating search results of the autonomous driving scenario transformer-based similarity search based on seen sequences according to some embodiments of the present disclosure.
FIG. 13a and 13b are exemplary images illustrating search results of the autonomous driving scenario transformer-based similarity search based on unseen sequences according to some embodiments of the present disclosure.
FIG. 14 is a graph illustrating an exemplary manually mocked input for the autonomous driving scenario transformer-based similarity search according to some embodiments of the present disclosure.
FIG. 15a to 15d are exemplary images illustrating search results of the autonomous driving scenario transformer-based similarity search based on manually mocked input according to some embodiments of the present disclosure.
FIG. 16a to 16c are exemplary images illustrating generalization ability test on Waymo Open Dataset for the autonomous driving scenario transformer-based similarity search according to some embodiments of the present disclosure.
FIG. 17 is a graph illustration T-SNE projection of the subsampled in-house scenario embeddings according to some embodiments of the present disclosure.
FIG. 18a and 18b are exemplary images illustrating search results of the autonomous driving scenario transformer-based similarity search based on requirements according to some embodiments of the present disclosure.
FIG. 19 is exemplary image illustrating search result of the autonomous driving scenario similarity search combing ego motion similarity with ViViT.
FIG. 20 is a block diagram illustration an exemplary general autonomous driving scenario similarity search system 2000 according to some embodiments of the present disclosure.

### DETAILED DESCRIPTION

The following description is presented to enable any person skilled in the art to make and use the present disclosure and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The terminology used herein is for the purpose of describing particular example embodiments only and is not intended to be limiting. As used herein, the singular forms "a", "an", and "the" may be intended to include the plural forms as well, unless the context clearly indicates otherwise. It will be further understood that the terms "comprise", "comprises", and/or "comprising", "include", "includes", and/or "including," when used in this specification, specify the presence of stated features, integers, steps, operations, elements, and/or components, but do not preclude the presence or addition of one or more other features, integers, steps, operations, elements, components, and/or groups thereof.

The following abbreviations and acronyms are provided for convenience and may be used throughout this disclosure: AD (Autonomous driving), ADAS (Advanced driver assistance systems), BEV (Bird's-eye-view), ViViT (Video Vision Transformer), and DTW (Dynamic Time Warping). These terms are exemplary, non-limiting, and should be interpreted broadly to include equivalent terminology and variations as understood by a person skilled in the art.

These and other features, and characteristics of the present disclosure, as well as the methods of operation and functions of the related elements of structure and the combination of portions and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way, but may also be configured in ways that are not listed.

In order to make the purpose, technical solution, and advantages of the present disclosure clearer, the present disclosure will be further described in detail below with reference to the accompanying drawings and embodiments. It should be understood that the specific embodiments described herein are merely illustrative of the present disclosure and are not intended to limit the present disclosure.

Autonomous driving data is highly redundant and finding interesting scenarios is hard. For example, many special cases may involve specific motion patterns of traffic participants. Due to the complexity and non-standard nature of these cases, it is challenging to find them using current tools. Available 3rd-party tools are not directly applicable either. Currently, several custom scenarios can be derived from an exo-trajectory database with hand-written SQL queries but it is not a scalable and generalizable solution. Many current approaches only use image as input. We combine different methods to exploit various modalities recorded during data collection. Our invention provides a solution for finding interesting scenarios by providing algorithms and models as well as their combinations for enabling near real-time similarity search using autonomous driving scenarios containing multimodal sensory data. We developed new solutions and combined them with existing models to efficiently enable autonomous driving scenario similarity search.

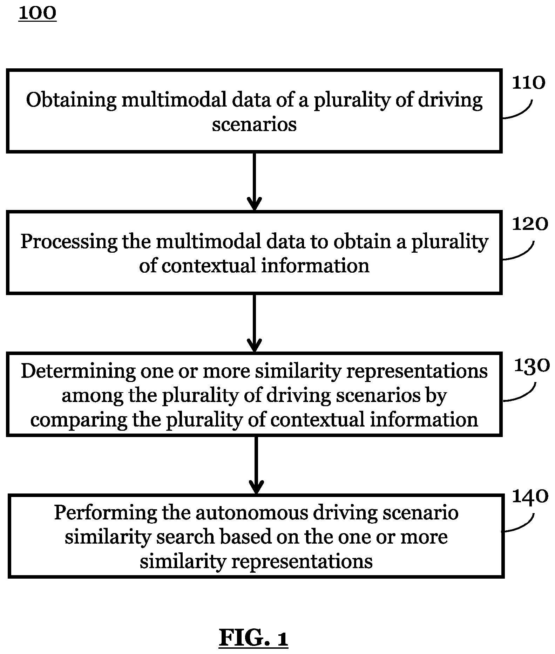

FIG. 1 is a flowchart illustrating an exemplary process 100 for autonomous driving scenario similarity search according to some embodiments of the present disclosure. A system for autonomous driving scenario similarity search is capable of performing the process 100.

In step 110, the system obtains multimodal data of a plurality of driving scenarios, wherein the multimodal data comprises any of video data, ego-motion data, and/or object representation data.

Specifically, multimodal data could refer to data collected from multiple sensors and sources. Video data is captured by cameras or other imaging devices. The video data could include visual information such as roads, traffic signs, pedestrians, and other elements in the driving environment. Ego-motion data could be provided by GNSS (Global Navigation Satellite System) and INS (Inertial Navigation System) sensors, and this data can record the vehicle's position, direction, and speed changes. Object representation data can include data about road users (such as vehicles and pedestrians), represented by bounding boxes such as 3D bounding box and/or trajectory data, capturing their movement patterns and positions. Multiple kinds of data are considered for higher efficiency and accuracy.

In step 120, the system processes the multimodal data to obtain a plurality of contextual information, wherein the plurality of contextual information comprises one or more scenario features of each of the plurality of driving scenarios.

In one example, the multimodal data may refer to one of the above. In another example, the multimodal data may include any combination of the above. In this case, different kinds of data can be combined to create a comprehensive understanding of the driving environment.

In some embodiment, the system can employ various algorithms or models to extract scenario features form the multimodal data. The scenario features may include but not be limited to objects, lanes, traffic signs, trajectory or any combination thereof. The system could generate contextual information about each driving scenario based on the scenario features.

In step 130, the system determines one or more similarity representations among the plurality of driving scenarios by comparing the plurality of contextual information. For example, various similarity metrics can be used to quantify the degree of similarity between driving scenarios. In some embodiments, similarity metrics may include but be not limited to cosine similarity, Dynamic Time Warping (DTW), Fréchet Distance or any combination thereof. Detailed descriptions of various exemplary implementations of steps 120 and 130 would be discussed further in the context. The similarity representations may include similarity scores between any pair of the plurality of driving scenarios. In other words, the similarity representations can illustrate a two-by-two comparison between the plurality of driving scenarios.

In step 140, the system performs the autonomous driving scenario similarity search based on the one or more similarity representations. For example, the similarity representations can be generated as a preprocessing step. After determining an interesting scenario, the system is able to search one or more most similar driving scenarios among the plurality of the driving scenarios based on the similarity representation. In some embodiments, the interesting scenario may be represented in the same way as the other driving scenarios in the system to facilitate the similarity search.

In some embodiments, the similarity score between any pair of driving scenarios can be obtained based on the similarity matrix. Thus, if the interesting scenario is one of the plurality of driving scenarios, it would be easy to search top-k similar scenarios. In some embodiments, when the interesting scenario is an external scenario, the interesting scenario can be processed to obtain its contextual information. As an example, the interesting scenario can be compared to any, or even all, of the plurality of driving scenarios to obtain the similarity scores. Then, top-k similar scenarios can be determined. As another example, after computing a similarity score between the interesting scenario and one reference driving scenario of the plurality of driving scenarios. Because the similarity representation (for example, the similarity matrix) includes similarity scores between the reference driving scenarios and any other driving scenarios, the similarity score between the interesting scenario and any other driving scenarios can be determined based on the similarity representation and the similarity score between the interesting scenario and the reference driving scenario.

In some embodiments, the video-based similarity search can be combined with other kinds of similarity search. In this case, there may be multiple similarity representations obtained from different approaches. The autonomous driving scenario similarity search can be performed based on the multiple similarity representations, which increase the accuracy of the search result.

### Video-based similarity search

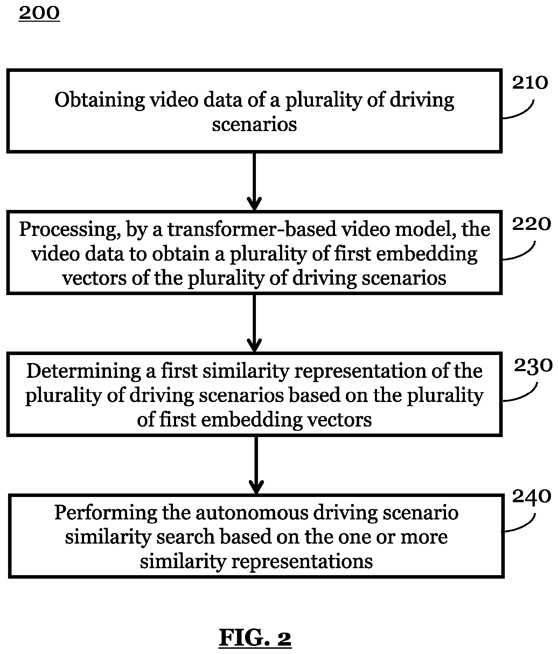

FIG. 2 is a flowchart illustrating an exemplary process 200 for autonomous driving scenario video-based similarity search according to some embodiments of the present disclosure. The system for autonomous driving scenario similarity search is capable of performing the process 200.

In step 210, the system can obtain video data of a plurality of driving scenarios. The system can also obtain other multimodal data discussed in step 110.

In step 220, the system can process, by a transformer-based video model, the video data to obtain a plurality of first embedding vectors of the plurality of driving scenarios. Each of the plurality of first embedding vectors may include one or more visual spatio-temporal features of the corresponding driving scenario.

In some embodiments, the transformer-based video model may have an embedding vector as an internal representation besides the classification result. If the transformer-based video is a classification model, the classification result can be omitted and the embedding vectors storing the compressed information about the scenario can be used. Using embedding vectors instead of classification results allows for a more streamlined and effective approach to scenario analysis, making it easier to handle large datasets and perform complex similarity searches. Furthermore, the model is not necessarily be a classification model. The classification model (ViViT) discussed below is merely an implementation detail. The following example is provided for illustrative purposes only, and it should be understood that other models with similar functionalities or structures may be implemented in a similar manner and are within the scope of the present invention.

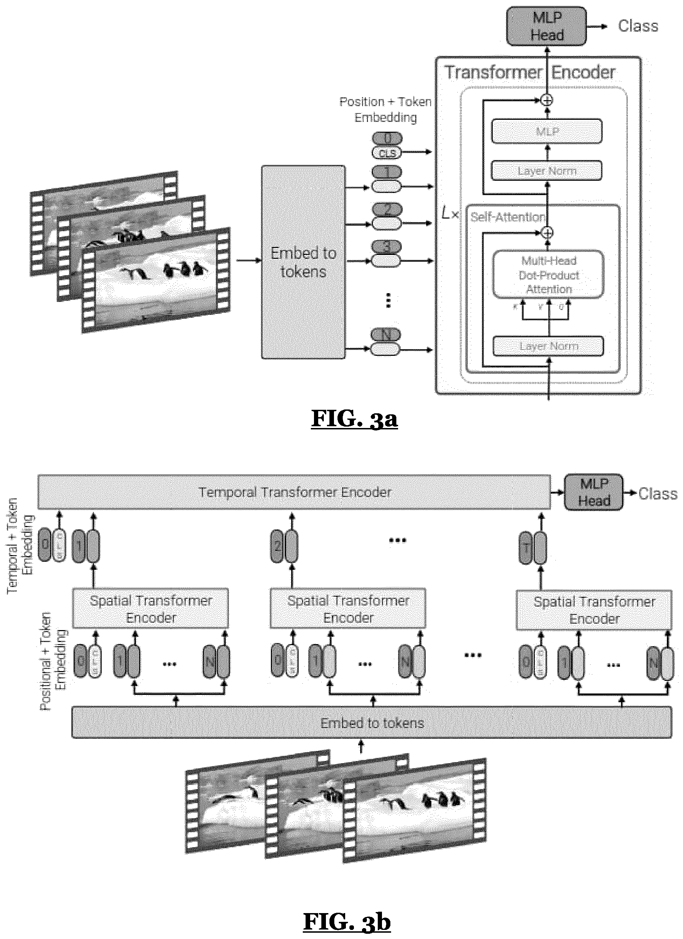

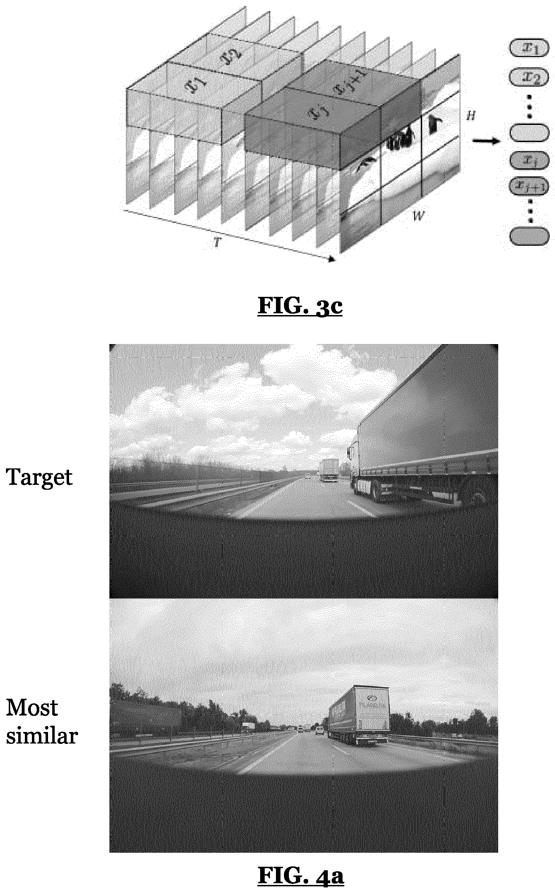

In some embodiments, the transformer-based video model is a transformer-based video classification model, such as ViViT, which is suitable for encoding spatial and temporal visual features. ViViT (Video Vision Transformer) is a better candidate trained for video classification. There may be two input representation: video sequence is split into patches (uniform sampling), and tubelet embedding. The first token can be used as the representative embedding, which is similar to 'cls' token in BERT. Arnab, Anurag, et al. have also discussed the ViViT model in "ViViT: A video vision transformer." It can enable an easy-to-use implementation with HuggingFace. FIG. 3a to 3c are schematic diagrams of transformer models for video classification (ViVIT) according to some embodiments of the present disclosure. FIG. 3a illustrates a pure-transformer architecture for video classification. FIG. 3b illustrates a factorized encoder. This model consists of two transformer encoders in series: the first models interactions between tokens extracted from the same temporal index to produce a latent representation per time-index. The second transformer models interactions between time steps. It thus corresponds to a "late fusion" of spatial- and temporal information. FIG. 3C illustrates the tubelet embedding. Nonoverlapping tubelets that span the spatio-temporal input volume can be extracted and linearly embedded.

In some embodiments, ViViT can tokenize a video and encode it by a series of transformer layers. The final embedding can be a d-dimensional vector (for example d=768) where the hidden state of the first token can be used. This concept may resemble the 'cls' token introduced by the BERT model. The embedding vector can store the visual spatio-temporal features. Finally, the driving scenarios to be considered can be represented by respective embeddings.

In some embodiments, the video data (e.g., input videos) can be subsampled and cropped driving-irrelevant parts. Subsampling may be used to be compatible with the pretrained Transformer model which uses less frames as input (for example, 32 frames) than frames of the video data (for example, 225 frames per scenario). For instance, the input videos can be subsampled to 32 frames and cropped the parts that do not contain useful information (e.g. sky and camera mount). The execution time of video processing can be executed by this optimization trick where the video parts which do not contain useful information are disregarded. Removing the driving-irrelevant part can speed up the NN inference time. Subsampling can aid rapid prototyping.

In some embodiments, the encodings of all autonomous driving scenarios can be computed as a preprocessing step. This way the compute-intensive neural network inference shall not be executed whenever a similarity search is performed.

In step 230, the system can determine a first similarity representation of the plurality of driving scenarios based on the plurality of first embedding vectors. In an example, the cosine similarity between these embeddings can represent the scenario similarity measure. In another example, a similarity matrix may be used as the first similarity representation. The similarity matrix may include similarity scores by comparing cosine similarity of each pair of the driving scenarios.

In step 240, the system can perform the autonomous driving scenario similarity search based on the one or more similarity representations. In some embodiments, the similarity score between any pair of driving scenarios can be obtained based on the similarity matrix. Thus, if the interesting scenario is one of the plurality of driving scenarios, it would be easy to find top-k similar scenarios. In some embodiments, when the interesting scenario is an external scenario, the interesting scenario can be encoded to obtain an embedding vector as the other driving scenarios. The similarity scores between the interesting scenario and the other driving scenarios can be calculated by comparing their embedding vectors. As an example, the interesting scenario can be compared to any, or even all, of the plurality of driving scenarios to obtain the similarity scores. As another example, after computing a similarity score between the interesting scenario and one reference driving scenario of the plurality of driving scenarios. Because the similarity matrix includes similarity scores between the reference driving scenarios and any other driving scenarios, the similarity score between the interesting scenario and any other driving scenarios can be determined based on the similarity matrix and the similarity score between the interesting scenario and the reference driving scenario. Furthermore, the similarity matrix can also be built in advance. As a result, the top-k similar scenarios can be found efficiently using PyTorch.

In some embodiments, the video-based similarity search can be combined with other kinds of similarity search. In this case, there may be multiple similarity representations obtained from different approaches. The autonomous driving scenario similarity search can be performed based on the multiple similarity representations, which increase the accuracy of the search result.

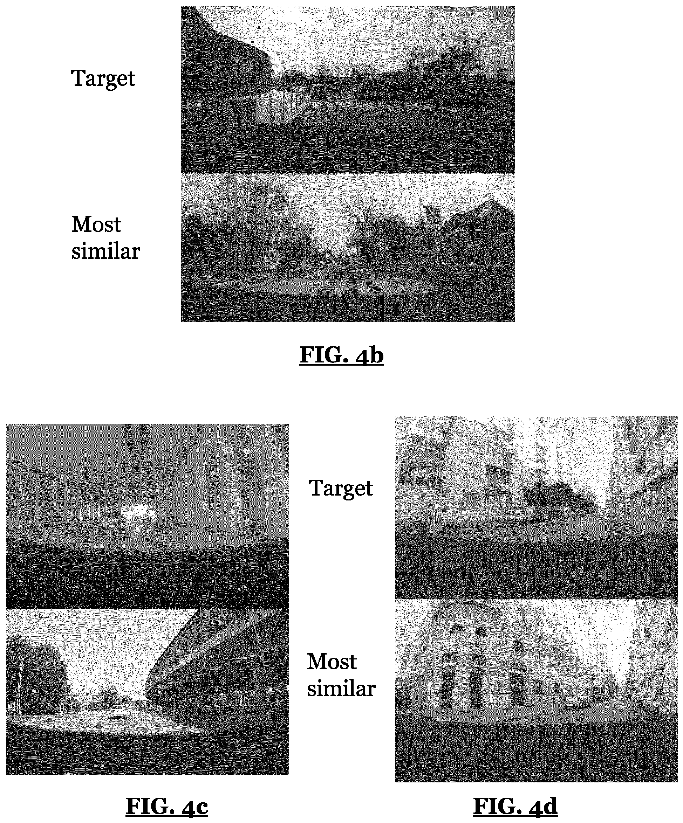

FIG. 4a to 4d are exemplary images illustrating search results of the autonomous driving scenario video-based similarity search according to some embodiments of the present disclosure. FIG. 4a to 4d shows the interesting scenario (e.g., target) and the most similar scenario. In particular, FIG. 4d shows the scene most similar to the target in the sample set (sample size = 2500). After a thorough qualitative evaluation, we can identify several attributes of this method. Visual similarity search works well, especially in the case of simple scenarios. Ego-trajectory is implicitly taken into account, but visual similarity plays an important role in the similarity search results. The model tends to find scenarios close in time. This behavior might provide non-diverse results. This approach can be improved by using recording time constraints, i.e., not considering scenarios recorded close in time. The approach can be further improved by explicitly taking exo-vehicles into account.

### Egomotion-based similarity search

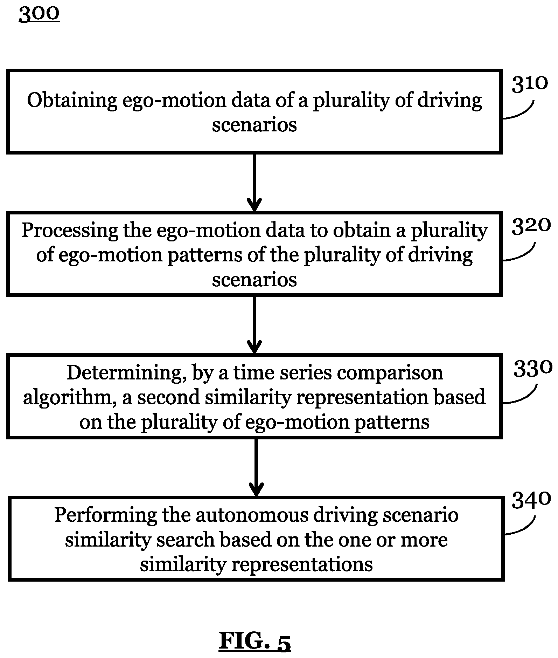

FIG. 5 is a flowchart illustrating an exemplary process 300 for the autonomous driving scenario ego-motion-based similarity search according to some embodiments of the present disclosure. The system for autonomous driving scenario similarity search is capable of performing the process 300. The process 300 incorporates ego-motion into the similarity search to consider the moving directions and velocities of the ego-vehicle. In other words, the process 300 is able to find scenarios with similar trajectories.

In step 310, the system can obtain ego-motion data of a plurality of driving scenarios. The ego-motion data enables the analysis of the position and orientation changes of the ego-vehicle and is provided by the GNSS/INS sensor. This way, the differences between motion patterns can be calculated. The system can also obtain other multimodal data discussed in step 110. Details can be found in the context.

In step 320, the system can process the ego-motion data to obtain a plurality of ego-motion patterns of the plurality of driving scenarios, wherein the plurality of ego-motion patterns can be determined according to an ego coordinate system.

In some embodiments, the ego-motion data can be represented as a series of matrices (for example, 4x4 RT (Rotation-Translation) matrices) with timestamps. An important assumption is that the world coordinate system is unsuitable for comparing ego-motions since similar ego-trajectories measured at geographically distant locations would result in huge dissimilarities, due to the internal operation of the trajectory comparison algorithms which uses a distance measure during similarity calculation. For example, the distance between points of trajectories recorded in the US and Hungary would result in large dissimilarities due to the geographical distance, even if the motion patterns of the vehicles are extremely similar. Therefore, a reference coordinate system, called the body coordinate system (e.g., the ego coordinate system) which is assigned to the vehicle body, can be used. This definition helps eliminate comparison errors that arise from geographical location differences, allowing similar motion trajectories recorded in different geographical locations to be compared more accurately.

Furthermore, the origin and/or orientation of the ego coordinate system can be defined relative to the vehicle itself, rather than relative to a global or geographical coordinate system. The origin of the ego coordinate system can be set at a point relative to the vehicle, such as the projected ground plane point under the center of the vehicle's rear axis at nominal vehicle body height and zero velocity. Then, ego-motions are compared in a coordinate system where the origin is the 3D position of the ego-motion at the first timestamp. This means that in the initial state of the coordinate system, the vehicle's speed is considered to be zero, but as time progresses, the movement of the vehicle will cause changes in the coordinate system. By using this method, the motion trajectories of the vehicle can be compared within a consistent reference framework, without being affected by geographical location differences.

In step 330, the system can determine, by a time series comparison algorithm, a second similarity representation based on the plurality of ego-motion patterns. The time series comparison algorithm can be any of the Dynamic Time Warping (DTW), FastDTW, SoftDTW, Time Warp Edit Distance (TWED) or the like. The following example is provided for illustrative purposes only, and it should be understood that other algorithms with similar functionalities or structures may be implemented in a similar manner and are within the scope of the present invention.

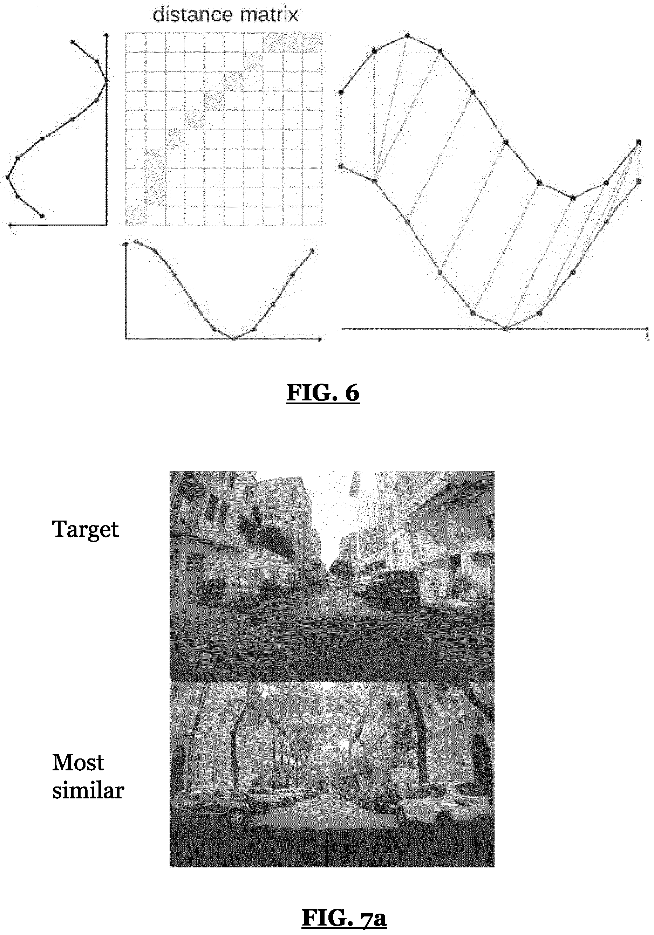

The similarity between two ego-trajectories can be determined by the Dynamic Time Warping (DTW) algorithm. FIG. 6 is a graph illustrating an exemplary concept for Dynamic Time Warping (DTW) according to some embodiments of the present disclosure. Dynamic Time Warping is an algorithm used for measuring the similarity between two temporal time series sequences. They can have variable speeds. It computes the distance from the matching similar elements between two series. It is used in dynamic programming to find the optimal path. The sequences are "warped" non-linearly in the time dimension to determine a measure of their similarity independent of certain non-linear variations in the time dimension. This sequence alignment method is often used in time series classification. Although DTW measures a distance-like quantity between two given sequences, it doesn't guarantee the triangle inequality to hold.

Referring to FIG.6, DTW can be used to find an optimal alignment between two given (time-dependent) sequences. DTW can be chosen as the similarity function since ego-motion can be seen as a time series (c.f. RT matrices with timestamps). The result of the DTW is the second similarity representation.

In some embodiments, the result of DTW is not a proper similarity metric such as Euclidean distance but rather a distance measure, the smaller the distance the larger the similarity. DTW can measure distances between time series considering time shifts, different speeds, and acceleration. One advantage of DTW over Euclidean distance is that DTW can handle time series with different lengths, and it is robust to deviation along the time dimension. Therefore, DTW can provide reliable results reflecting the similarity between the motion patterns of two vehicles.

In some embodiments, the distance matrix can be calculated as a preprocessing step, like in the case of the video similarity matrix. The only modification needed for using top-k is to negate the distances. This method enables the transformation of the minimal distance search problem into maximal similarity search which can be solved efficiently.

As an example, SoftDTW can be used. Soft-DTW enhances the traditional DTW algorithm by enabling efficient GPU utilization through parallel computation of the similarity matrix and precomputation for each sequence. In other words, similarity matrix computation can be highly parallelizable, and it can be precomputed for each sequence. This results in faster and more scalable similarity measurements, making it suitable for applications involving large and complex time series data. As another example, similarity search is implemented as torch.topk, which is a fastand efficient implementation.

In some embodiments, the process 300 can rely merely on the characteristics of the ego-vehicle's motion without the incorporation of visual cues. Therefore, egomotion-based similarity search can identify scenarios with similar moving patterns to the target scenario regardless of the visual environment. This function can be useful for finding e.g. a sudden braking independently of whether it was performed on different environments such as a highway or urban area.

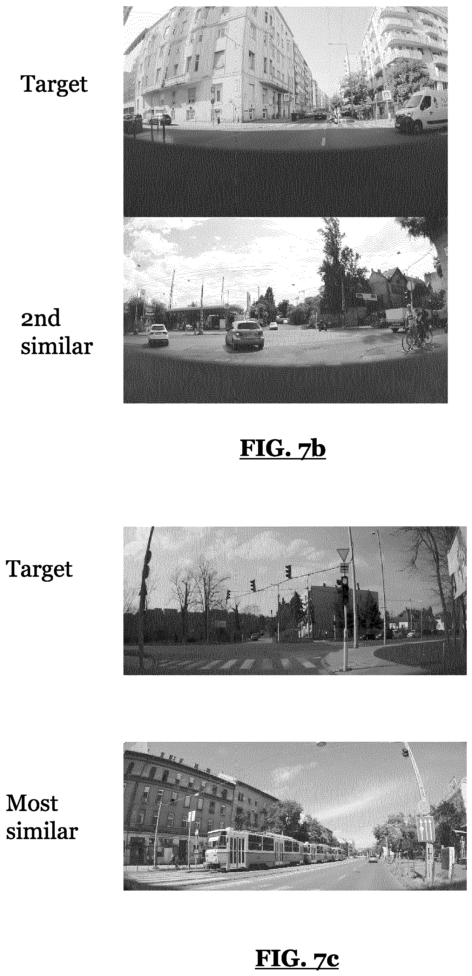

In step 340, the system can perform the autonomous driving scenario similarity search based on the one or more similarity representations. This step is similar to step 140 and step 240. The ego-motion data in the interesting scenario can be represented as a series of matrices, such as 4x4 RT (Rotation-Translation) matrices, with time stamps for processing. Furthermore, the similarity representation between the interesting scenario and other driving scenarios can be determined by the time series comparison algorithm. The system can perform similarity search based on the similarity representation. Referring to FIG. 7a, the process 300 works well for finding scenarios with similar trajectories. However, the process 300 does not take the environment into consideration (see FIG. 7b and 7c). When a granular similarity search is important taking into account small nuances, the egomotion-based similarity search can be improved by considering other traffic participants. Referring to FIG.7c, such consideration should also be noticed for scenarios without similar trajectory.

In some embodiments, the egomotion-based similarity search can be combined with other kinds of similarity search. In this case, there may be multiple similarity representations obtained from different approaches. The autonomous driving scenario similarity search can be performed based on the multiple similarity representations, which increase the accuracy of the search result.

### Exo-trajectory-based similarity search

The video and egomotion-based similarity search methods provide decent performance for certain use cases but need to be improved for the fine-grained similarity search. Such improvement may include explicitly considering the motion of other traffic participants. Though the transformer model used by the video-based similarity search approach implicitly encodes these exo-vehicles, overreliance on visual features might prevent the required accuracy needed for finding certain complex scenarios.

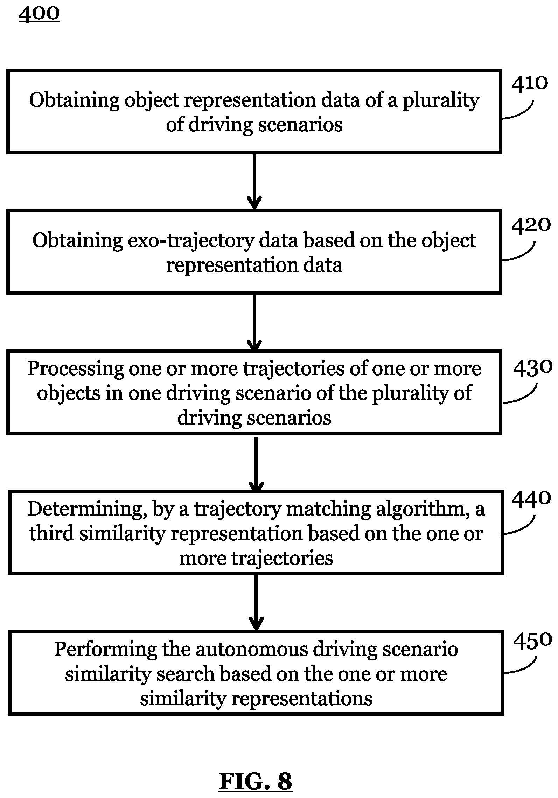

FIG. 8 is a flowchart illustrating an exemplary process 400 for the autonomous driving scenario exo-trajectory-based similarity search according to some embodiments of the present disclosure. The system for autonomous driving scenario similarity search is capable of performing the process 400.

In step 410, the system can obtain object representation data of a plurality of driving scenarios. The objection representation may include but is not limited to 3D bounding boxes, point clouds, voxel grids or the like. The system can also obtain other multimodal data discussed in step 110.

In step 420, the system can obtain exo-trajectory data based on the object representation data. When object representation data (such as 3D bounding boxes) are available, we can extract the trajectories of other traffic participants. This additional input enables the comparison of exo-trajectories belonging to different scenarios. Analyzing the moving patterns of other traffic participants can provide a granular similarity search method.

In step 430, the system can process one or more trajectories of one or more objects in one driving scenario of the plurality of driving scenarios. In some embodiments, the one or more trajectories are determined according to an ego coordinate system. The same coordinate system mentioned in the egomotion-based similarity search method description above can be used to handle the issues raised by the geographical distance of similar trajectories.

In some embodiments, before processing the determining the third similarity representation, the system can categorize the one or more trajectories into a set of groups based on types of the one or more objects and/or movement patterns of the one or more objects. Specifically, the trajectories can be categorized into groups based on the object type and the movement pattern. Different kinds of groups can be determined according to the need of the similarity search. For example, the following groups can been identified:
- Vehicle;
- Stopped Vehicle;
- Pedestrian;
- Rideable.

In step 440, the system can determine, by a trajectory matching algorithm, a third similarity representation based on the one or more trajectories. Like the previous two methods, the exo-trajectory-based similarity search requires a metric as the third similarity representation.

In some embodiments, after conducting several experiments, Fréchet Distance can be identified as the optimal metric for this task. Fréchet Distance measures the similarity between two trajectories, taking shape and direction into account. In other words, this metric not only considers the distance between trajectory waypoints but also compares the global patterns.

The distance calculation process may consider the above grouping: two trajectories from different groups (e.g. a pedestrian and a vehicle) cannot be matched. We can assign a large cost (distance) when the groups corresponding to two trajectories are mismatched preventing the assignment method from matching these trajectories. This approach is beneficial since it regards the similar movement patterns of semantically close objects. Moreover, the unnecessary trajectory comparison can be avoided resulting in increased accuracy and efficiency.

In some embodiments, the trajectories can be matched when the distance matrix is calculated. The trajectory matching algorithm can be used to find the best matching/assignment between trajectories. The trajectory matching algorithm may include but is not limited to Hungarian Algorithm, Greedy Algorithm, or the like. The Hungarian Algorithm is a combinatorial optimization algorithm that solves the assignment problem.

In some embodiments, a penalty mapping can be introduced to refine the optimal matching on a per-class basis. To further refine the matching, a penalty mapping is used for unmatched trajectories on a per-class basis. In this mapping, unmatched vehicles may incur a higher penalty, whereas for example stopped vehicles may incur a relatively lower penalty. This can avoid overly penalizing scenarios that differ mainly by stationary objects, while emphasizing the importance of matching active ones. This solution ensures that scenarios with a similar number of objects and comparable movement patterns receive higher similarity values.

In some embodiments, the system is able to perform the following steps: determine a distance matrix between each pair of the driving scenarios by comparing trajectories of objects, in the same group, of the pair driving scenarios, wherein the pair driving scenarios are any two driving scenarios of the plurality of driving scenarios; determine, by the trajectory matching algorithm, an optimal matching of the pair driving scenarios based on the distance matrix; calculate a similarity score between the pair driving scenarios based on the optimal matching; and determine the third similarity representation based on the similarity scores of all pair driving scenarios of the plurality of driving scenarios. This approach may require computing a distance matrix which stores the distance between the trajectories of two scenarios. The matrix values can be the Fréchet Distances between each trajectory pair.

Specifically, the exo-trajectory-based similarity search process can be written as the following:
- **Distance matrix calculation for two scenarios.** An N x M matrix is calculated using the Fréchet Distance between the trajectories of the two scenarios where N and M are the number of trajectories of the first and second scenarios respectively. The comparison disregards trajectories belonging to different groups (e.g. a vehicle and a pedestrian).
- **Matching similar trajectories from two scenarios.** The Hungarian Algorithm solves the assignment problem, resulting in an optimal matching between exo-trajectories. Unmatched exo-trajectories are penalized.
- **Aggregation.** The similarity between the two scenarios is calculated by aggregating the Fréchet-distance of matched trajectories while considering the penalties. A key factor here is the matched ratio, defined as: $matched = 1.0 - \frac{unmatched}{total}$

This rewards scenarios with more matched objects. This ratio is incorporated into a combined cost term along with the mean matched distance and the total unmatched penalty. Finally, the combined cost is converted into a [0,1] similarity measure through a scaling function: $\frac{1}{\left(1+\frac{combined}{κ}\right)}$

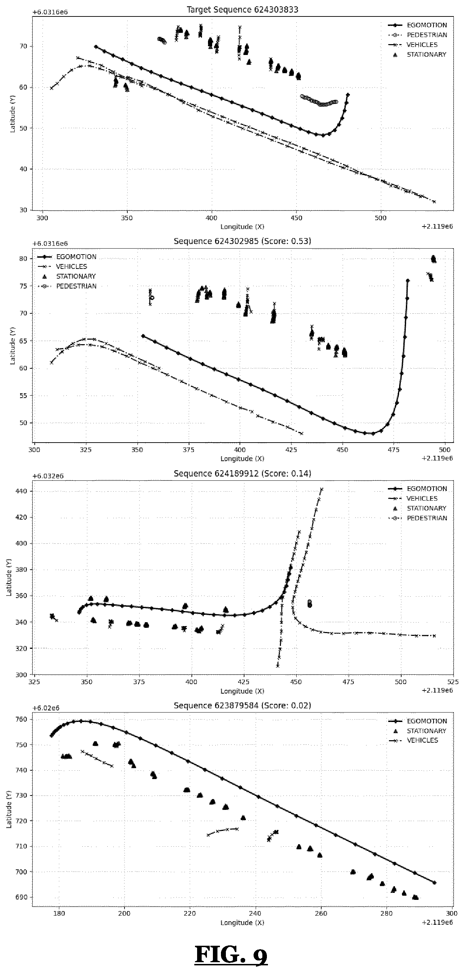

The penalization process is especially beneficial when the two scenarios have similar numbers of other traffic participants, but these objects cannot be matched due to category mismatches. This way, the exo-trajectory-based similarity search ensures the sensitivity to the movement patterns of all objects considering their object categories. The FIG. 9 shows an example output of the exo-trajectory-based similarity search method.

In step 450, the system can perform the autonomous driving scenario similarity search based on the one or more similarity representations. This step is similar to step 140, step 240 and step 340. The object representation data of the interesting scenario can be used to obtain its exo-trajectory data. The similarity representation (such as similarity or distance matrix) between the interesting scenario and other driving scenarios can be computed by the trajectory matching algorithm. The system can perform the similarity search based on the similarity representation.

In some embodiments, the exo-trajectory-based similarity search can be combined with other kinds of similarity search. In this case, there may be multiple similarity representations obtained from different approaches. The autonomous driving scenario similarity search can be performed based on the multiple similarity representations, which increase the accuracy of the search result.

### Transformer-based similarity search

While the exo-trajectory-based similarity search method provides an explainable solution for comparing autonomous driving scenarios, its high computation intensity might hinder large-scale deployment. Therefore, a data-driven solution is provided, which enables a computationally less intensive precomputation method and allows fast querying.

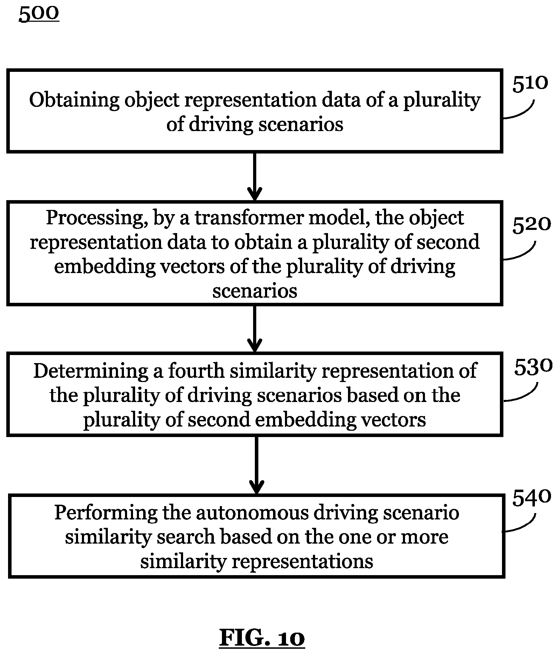

FIG. 10 is a flowchart illustrating an exemplary process 500 for the autonomous driving scenario transformer-based similarity search according to some embodiments of the present disclosure. The system for autonomous driving scenario similarity search is capable of performing the process 500.

In step 510, the system can obtain object representation data of a plurality of driving scenarios. The objection representation may include but is not limited to 3D bounding boxes, point clouds, voxel grids or the like. The system can also obtain other multimodal data discussed in step 110.

In step 520, the system can process, by a transformer model, the object representation data to obtain a plurality of second embedding vectors of the plurality of driving scenarios. A model, called ScenarioFormer, can be designed, developed and trained, which is based on the vision transformer model.

In some embodiments, to process the object representation data, the system is able to execute the following steps: obtaining a plurality of tensors based on the object representation data of any driving scenario, wherein a tensor represents trajectories of objects in the corresponding driving scenario; projecting, by a linear layer of the transformer model, the plurality of tensors into a high-dimensional embedding space to obtain a plurality of high-dimensional tensors; adding positional encoding to the plurality of high-dimensional tensors within transformer layers of the transformer model; and producing, by the transformer model, a plurality of second embedding vectors of the plurality of driving scenarios based on the plurality of high-dimensional tensors with positional encoding. One tensor may represent one driving scenario. The tensor can reflect trajectories of objects in the driving scenario. As an example, the system can process the object representation by a birds-eye-view, BEV, before obtaining the one or more tensors. The BEV projection can reduce the input dimension.

Specifically, the exo-trajectories of a scenario can be represented by tensors with a shape (N, T, C) where N is the number of objects, T is the number of timesteps, and C is the number of attributes of the object. We set N=25 (with zero padding when the object number is less than 25), T=15 (i.e., 1 FPS), and C=7. The following bounding box properties can be included in the input tensor after a BEV projection:
● longitudinal position (x coordinate),
● lateral position (y coordinate),
● object length,
● object width,
● heading (yaw angle),
● radial velocity,
● angular velocity.

Furthermore, the input tensor is projected into a high-dimensional embedding space (e.g. 1024) by a Linear layer. Then, positional encoding is added to retain the spatio-temporal information within the Transformer layers. The output of the model is a d-dimensional embedding (e.g., the second embedding vectors). The system may convert the bounding box detected by a DAA (Driver Assistance Algorithm) system into embedding vectors that can be processed by machine learning models.

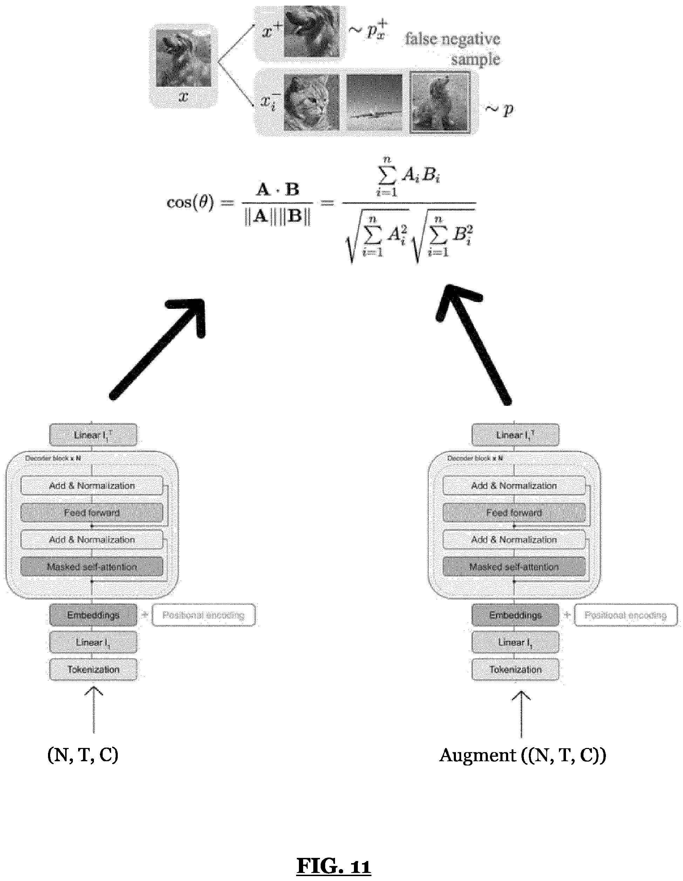

In some embodiments, the transformer model can be trained by a contrastive learning method. FIG. 11 is a graph illustrating an exemplary concept for Contrastive Learning according to some embodiments of the present disclosure. The training process includes: obtaining a plurality of original training tensors of a plurality of original training driving scenarios based on training multimodal data; generating a plurality of augmented training driving scenarios by augmenting the plurality of original training tensors; determining positive pairs and negatives pairs, wherein the positive pairs is one original training driving scenario and its corresponding augmented training driving scenarios, and the negative pairs is the original training driving scenario with any other training driving scenario; and training the transformer model by maximizing similarity within the positive pairs and minimizing similarity within the negative pairs.

Specifically, ScenarioFormer is a Siamese-Transformer where the model is fed by two input tensors and is trained with contrastive learning. One input tensor represents the original scenario input while the second input tensor is the augmented version of the first input. the following augmentations can be utilized:
● random longitudinal offset from the interval [0, 10] m,
● random lateral offset from the interval [0, 0.5] m,
● random length extension from the interval [0, 0.5] m,
● random width extension from the interval [0, 0.25] m,
● Random heading perturbation from the interval [0, 5] degree.
● Random dropout of objects.
It should be noted that the method is not constrained to these concrete numbers. The above parameters are used merely as an example for the implementation, and not intended to limit the scope of the present disclosure. For persons having ordinary skill in the art, multiple variations and modifications may be made under the teachings of the present disclosure. However, those variations and modifications do not depart from the scope of the present disclosure.

Contrastive learning aims to pull similar scenarios close to each other in the embedding space while pushing different scenarios far away. The loss may include: matching original and augmented trajectories using binary cross-entropy; and contrastive InfoNCE loss for pulling original/augmented trajectories and pushing all other trajectories far away in embedding space.

Similar scenarios can be generated by augmenting the original scenario with the above-mentioned augmentations. These (original, augmented) scenarios are the positive pairs that will be close to each other in the embedding space. Negative pairs can easily be formed by taking all other scenarios contained by the same batch. The metric used to determine the similarity between two scenarios is cosine similarity. We can use the InfoNCE loss represented by a CrossEntropy loss. Since contrastive learning is sensitive to batch size, we utilized gradient accumulation to increase the effective batch size without running out of GPU memory. The model implementation is very simple, consisting of approximately 160 lines of code, making it easy to understand and maintain.

In step 530, the system can determine a fourth similarity representation of the plurality of driving scenarios based on the plurality of second embedding vectors. The scalability of this approach is ensured by the precomputation of the embeddings. Then, the same similarity search described in the video-based method can be used. To find similar scenarios to a new one, it has to be encoded by the model, then cosine similarity can be used to query similar scenarios from the embedding pool.

In an example, the cosine similarity between these embeddings can represent the scenario similarity measure. In another example, a similarity matrix may be used as the fourth similarity representation. The similarity matrix may include similarity scores by comparing cosine similarity of each pair of the driving scenarios.

In step 540, the system can perform the autonomous driving scenario similarity search based on the one or more similarity representations. This step is similar to step 140, step 240, step 340 and step 450. The object representation data of the interesting scenario can be represented by the second embedding vectors by using the transformer model. The similarity representation (such as similarity matrix) between the interesting scenario and other driving scenarios can be computed based on the second embedding vectors. The system can perform the similarity search based on the similarity representation.

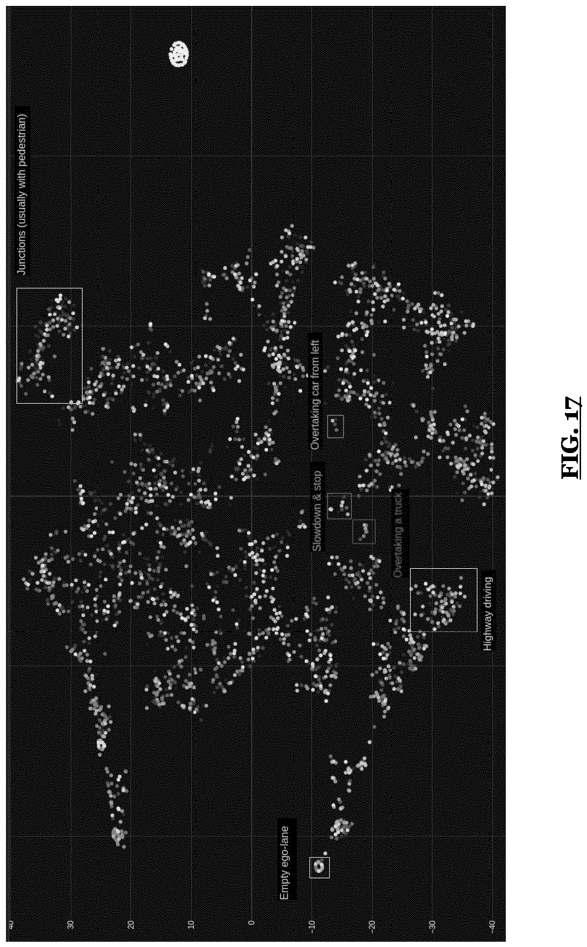

ScenarioFormer finds similar scenarios even when the target scenario is complex. We investigated the generalization ability of the model trained on in-house dataset on the Waymo Open dataset. Despite the two datasets having large differences, the model can find similar scenarios from the in-house dataset the Waymo Open dataset. Furthermore, we can project the embeddings from the high-dimensional embedding space into 2D using T-SNE. This enables us to visualize the embedding space and find similar scenarios to a target using an interactive graphical user interface besides the cosine similarity-based scenario finding. The FIG. 17 depicts some clusters of the embedding space of the subsampled in-house dataset.

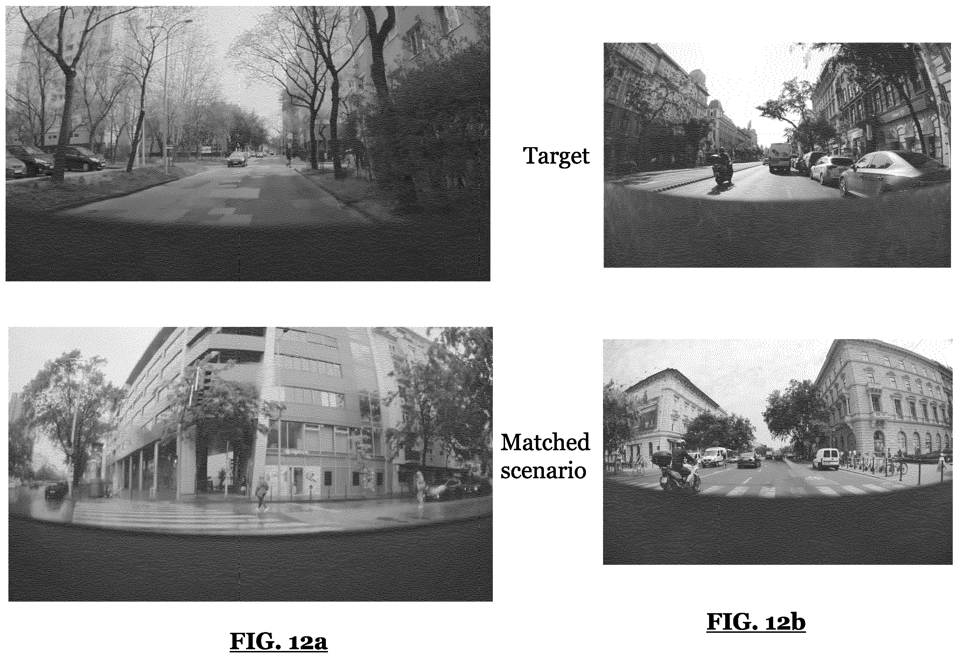

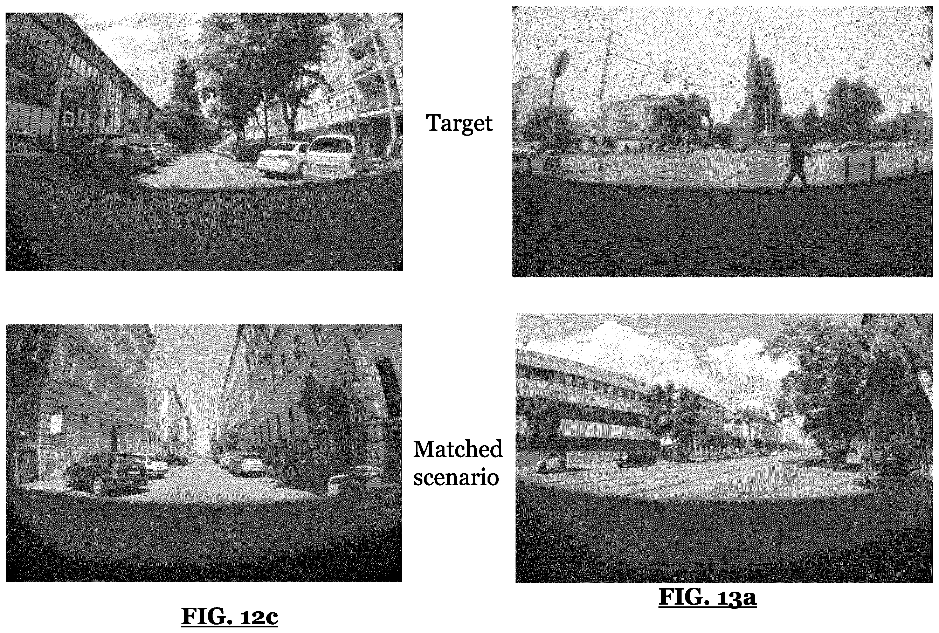

FIG. 12a to 12c are exemplary images illustrating search results of the autonomous driving scenario transformer-based similarity search based on seen sequences according to some embodiments of the present disclosure. In this case, the interesting scenario is one of the plurality of driving scenarios. FIG. 12a shows search results on seen sequences - jaywalker. FIG. 12b shows search results on seen sequences - motorcycle from left. FIG. 12c shows search results on seen sequences - parking cars and bikes. The matched scenarios in FIG. 12a to 12c are selected from the top-10 matches of a dataset including 3876 sequences.

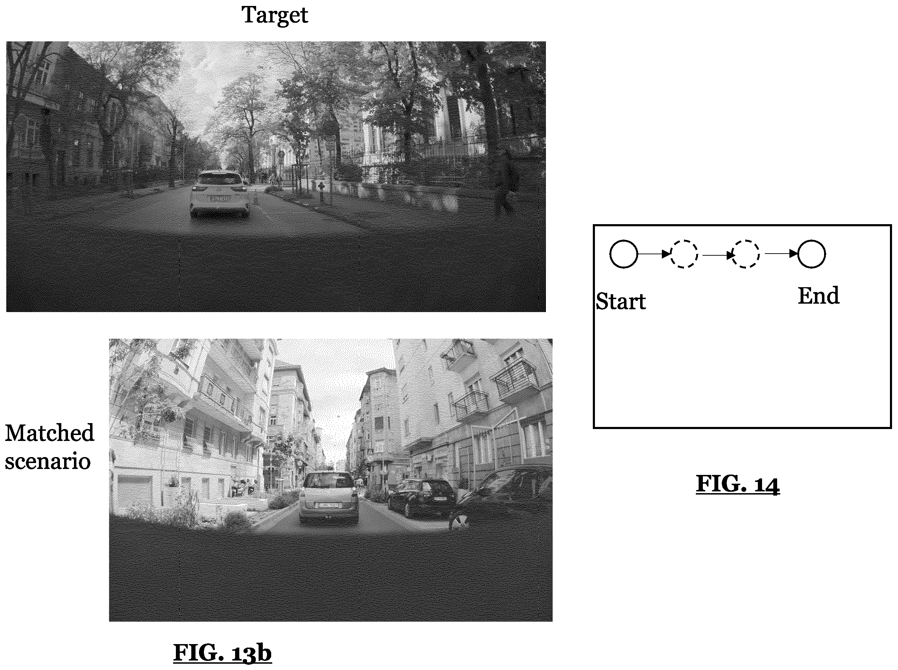

FIG. 13a and 13b are exemplary images illustrating search results of the autonomous driving scenario transformer-based similarity search based on unseen sequences according to some embodiments of the present disclosure. In this case, the interesting scenario is an external scenario, which is not one of the plurality of driving scenarios. FIG. 13a shows search results on unseen sequences - closeby VRU (Vulnerable Road Users). FIG. 13b shows search results on unseen sequences - stop/start and pedestrians. The matched scenarios in FIG. 13a and 13b are selected from the top-10 matches of a dataset including 4992 sequences

In some embodiments, compared with the target driving scenario input in FIGs. 12 and 13, the input can be manually mocked movement shown in FIG. 14. The input is not a actual driving scenario, but a mocked movement. For example, the interested object can be represented by a symbolic circle. And its movement can be represented by the trajectory of the circle. The start and end points are shown in FIG. 14. It should be noted that the symbol and movement shown in FIG. 14 are merely for the purpose of illustration, and not intended to limit the scope of the present disclosure. In this case, the input may be any simplified motion of the interested object represented in any manner.

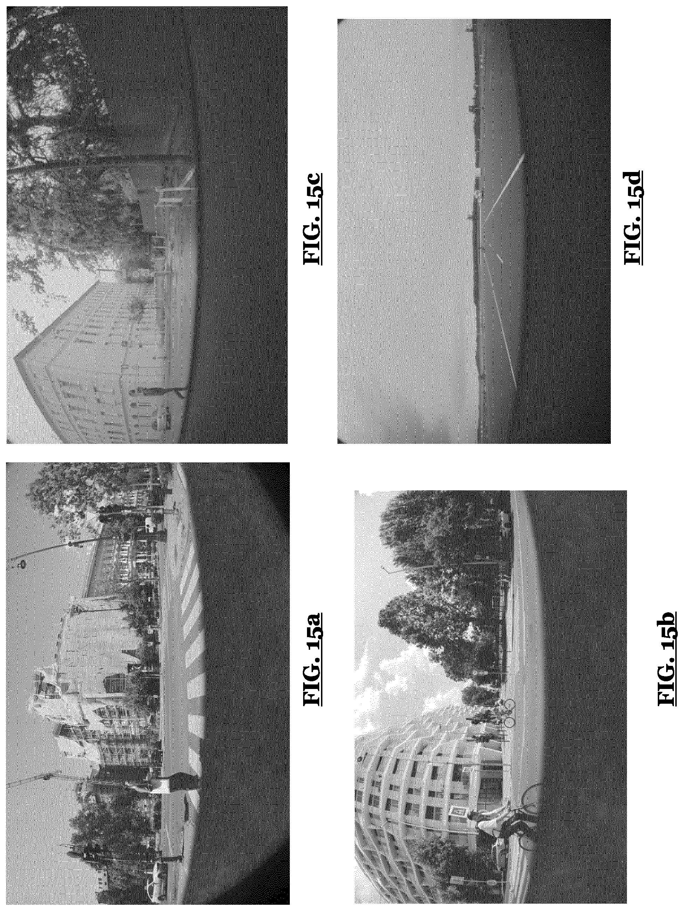

FIG. 15a to 15d are exemplary images illustrating search results of the autonomous driving scenario transformer-based similarity search based on manually mocked input according to some embodiments of the present disclosure. FIG. 15 a to 15d are matched scenarios after inputting manually mocked input like the input of FIG. 14. In FIG. 15a, the input is pedestrian crossing in front of the egocar. In FIG. 15b, the input is bicycle crossing in front of the egocar. In FIG. 15c, the input is pedestrian crossing in front of the egocar. In FIG. 15d, the input is bicycle crossing in front of the egocar. The matched scenarios are selected from the top-25 matches of a dataset including 4992 sequences not used for training.

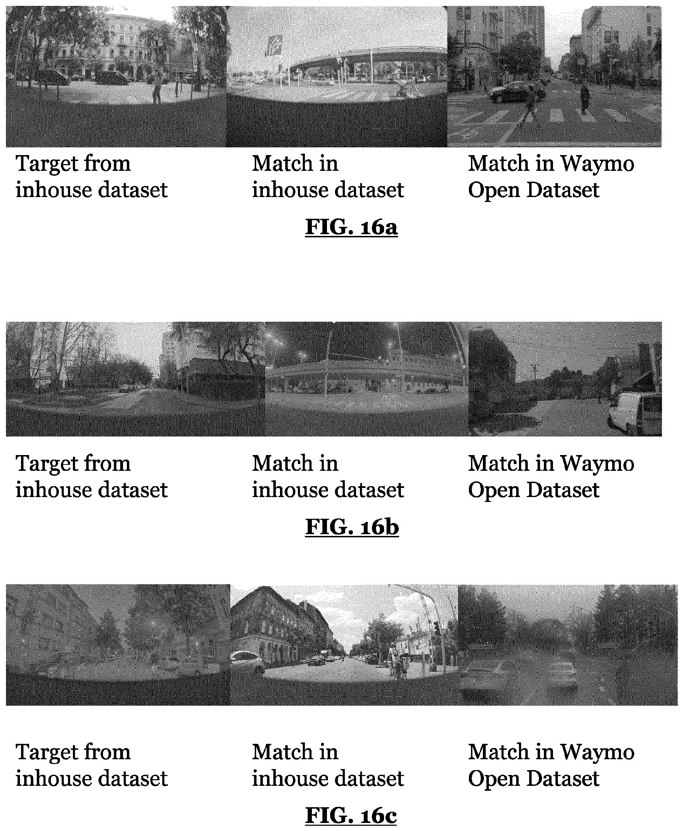

In some embodiments, ScenarioFormer is not trained on Waymo Open Dataset. The model can be evaluated for its generalization ability using the Waymo Open Dataset. FIG. 16a to 16c are exemplary images illustrating generalization ability test on Waymo Open Dataset for the autonomous driving scenario transformer-based similarity search according to some embodiments of the present disclosure. The matched scenario is selected from the top-25 matches.

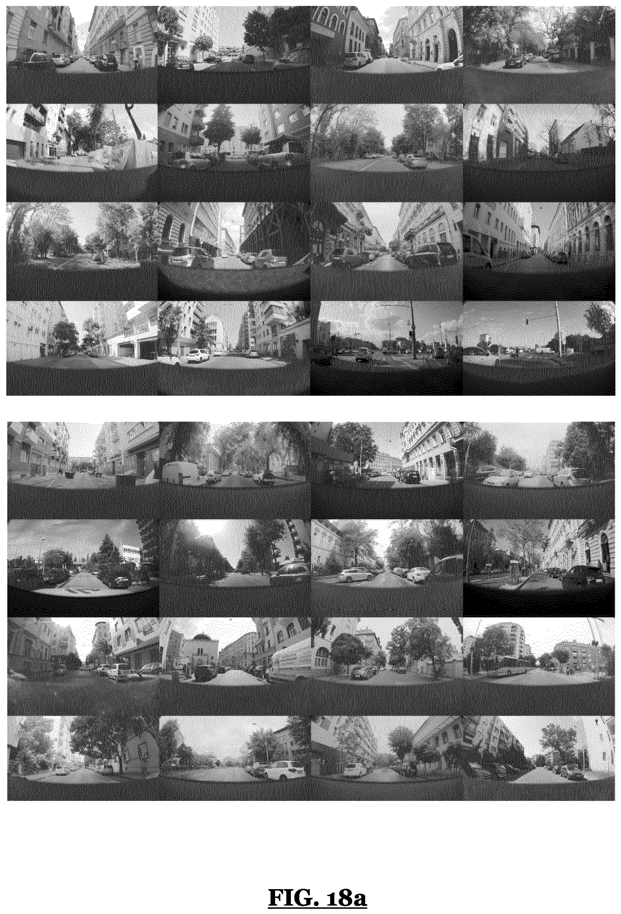

In some embodiments, the user can search scenarios by inputting requirements. In an example, if the user wants to find scenarios with crossing vehicles, the requirements would be:
normal daylight;
urban environment;
In each sequence the ego vehicle shall be moving for at least 10 seconds in the beginning of the clip, and for at least 3 seconds while crossing vehicles are visible;
In each sequence at least 1 vehicle should cross our path travelling perpendicular to the ego vehicles direction of travel;
At least 15 sequences with at least 1 vehicle crossing from left;
At least 15 sequences with at least 1 vehicle crossing from right;
No lead vehicle when approaching the intersection.
After testing, 54 sequences using the embeddings is found. FIG. 18a shows at least partial search results of this case.

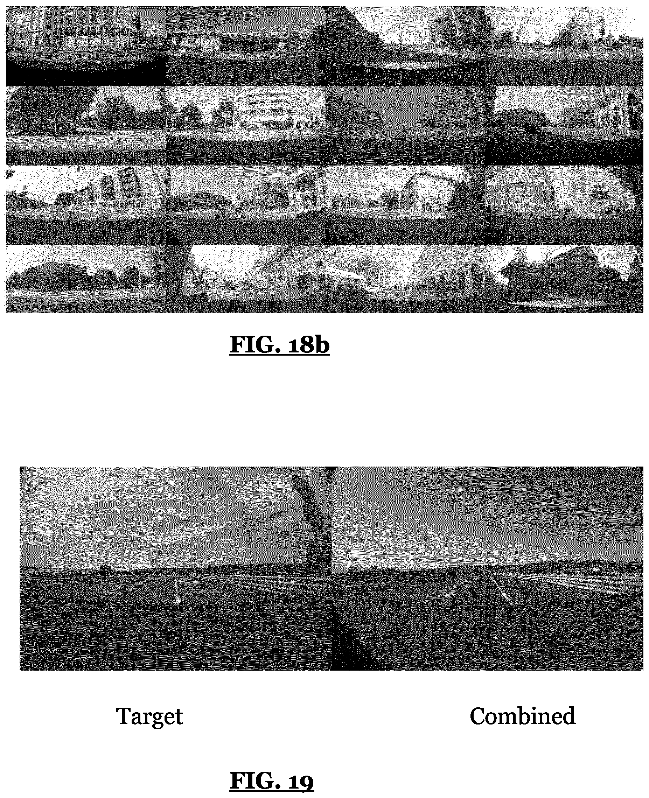

In another example, if the user wants to find scenario with dense urban environment with VRUs, the requirements would be:
normal daylight;
free flowing traffic in at least a part of each sequence;
at least 1 pedestrian or bicycle rider visible on the front 120 camera on every frame of each sequence;
at least 1 pedestrian or bicycle rider visible on the front 120 camera while they are on the road surface for at least 15 frames in the sequence;
maximum 15 pedestrians visible per frame on any of the front 120 degree camera or the back camera;
At least 20 sequences where we approach an intersection/zebra, stop and pedestrians or bicycles start crossing, note: we must be the first vehicle in the line. The sequence shall start at least 5 seconds before we come to a full stop, and shall and at least 5 seconds after pedestrians start to cross.
After testing, 25 sequences using the embeddings is found. FIG. 18b shows at least partial search results of this case.

The above context discusses four method for autonomous driving scenario similarity search. A video transformer model is responsible for spatiotemporally similar scenario searches based on visual features. The ego / exo-trajectory-based similarity search method utilizes the GNSS/INS sensor and the bounding boxes of exo-vehicles. Finally, we have designed and trained a transformer model with contrastive learning to enable fast cosine similarity-based autonomous driving scenario search.

In some embodiments, the plurality of driving scenarios can be obtained from one or more sensors and/or a scenario editor. For example, the video data or ego-motion data can be generated by the scenario-editor based on the user's requests. Since exo-trajectory and transformer-based similarity search methods rely only on 3D bounding boxes as input, arbitrary target scenarios can be created using a scenario editor. Bounding boxes are abstracted away from physical sensors enabling the construction of any scenarios without real-world recordings. This alleviates the issue of finding an initial target scenario from the huge amount of recorded data.

In some embodiments, the accuracy of the ScenarioFormer (as well as the exotrajectory-based search method) can be even further improved by grouping the scenarios based on predefined characteristics. For example, the operational design domain such as highway or rural can easily be determined using the GPS positions already stored in the egomotion. This way, vastly different scenarios would not be compared, and false positive matching could not be performed.

### Combination of different similarity search methods

All of the similarity search methods have their pros and cons. Video-based similarity search relies on spatiotemporal visual features but does not explicitly consider the egomotion and other traffic participants. Egomotion-based similarity search alleviates the comparison of the movement of the recording vehicles but disregards the visual features and exo-vehicles. The exotrajectory-based method and ScenarioFormer solve the issue of taking other participants into account disregarding the visual features and egomotion.

However, these methods can be combined to form an improved/ensembled model increasing search accuracy. After determining more than one similarity representations, the more than one similarity representations can be combined to obtain a fifth similarity representation. And the autonomous driving scenario similarity search can be performed based on the fifth similarity representation.

In some embodiments, video-based and transformer-based methods can be combined with the egomotion-based similarity search. The egomotion-based search can be used as a 'reranker' that sorts the results of the video/transformer-based method. The egomotion-based method is fed by the top-k similar scenarios found by ViVit /ScenarioFormer. This computation can easily be performed on-the-fly. The final result can be computed by taking the weighted sum of the two similarity methods. FIG. 19 is exemplary image illustrating search result of the autonomous driving scenario similarity search combing ego motion similarity with ViViT. In a similar way, any of the above methods can be combined to improve the accuracy and robustness of the similarity search. Specifically, any of the methods can be used as a 'reranker' that sorts the results of other methods or the results of a method combining any other methods.

In some embodiments, for combined metric calculation, zero value means perfect matching. Since we want to get closer to zero and cosine similarity increases when vectors are close to each other, we would subtract the similarity from 1. This way, video similarity can be taken into account and egomotion similarity is weighted with semantic similarity in a proper manner. The metric can even further be refined by applying a scaling factor to the video embedding score itself. For example, combined_similarity = egomotion_similarity_scores * video_embedding_score * 1/scaling_factor. The combination can also be achieved by rearranging the above formula. When the value ranges of each similarity score are similar, the formula could be 'combined_similarity = first_similarity_scores * second_similiary _score * (any other similarity scores if needed) * 1/scaling_factor'. When the value ranges of each similarity score are quite different, the formula could include corresponding scaling factor for each similarity score, such as combined_similarity = first_similarity_scores * second_embedding_score * third_embedding_score * 1/first_scaling_factor * 1/second_scaling_factor. Multiple scaling factors can individually control the influence of each modality. It should be noted that the formulas in the context are merely used for illustrative purposes only, and not intended to limit the scope of the present disclosure. The formula may be arranged in other forms to reflect the combination of multiple methods.

In some embodiments, multi-criteria decision making methods, such as Borda voting, can be used to combine all similarity calculation methods. This approach helps leverage the strengths of different similarity calculation methods, providing more accurate and comprehensive matching results.

Thus, any solution can be combined using the 'reranker' method or extending the formula 'combined_similarity = egomotion_similarity_scores * video_embedding_score * 1/scaling_factor' with one or more similarities or with voting in the context of the present disclosure.

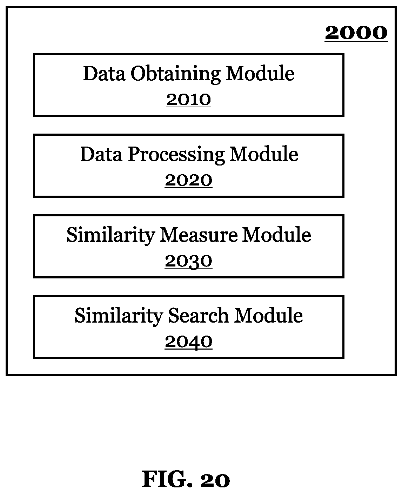

FIG. 20 is a block diagram illustration an exemplary general autonomous driving scenario similarity search system 2000 according to some embodiments of the present disclosure. The system 2000 includes a data obtaining module 2010, a data processing module 2020, a similarity measure module 2030 and a similarity search module 2040. The data obtaining module 2010 is configured to obtain multimodal data of a plurality of driving scenarios, wherein the multimodal data includes any of video data, ego-motion data, and/or object representation data. The data processing module 2020 is configured to process the multimodal data to obtain a plurality of contextual information, wherein the plurality of contextual information includes one or more scenario features of each of the plurality of driving scenarios. The similarity measure module 2030 is configured to determine one or more similarity representations among the plurality of driving scenarios by comparing the plurality of contextual information. The similarity search module 2040 is configured to perform the autonomous driving scenario similarity search based on the one or more similarity representations.

Our invention provides a solution to find similar autonomous driving scenarios to a given interesting case by providing algorithms and models as well as their combinations for enabling near real-time similarity search using autonomous driving scenarios containing multimodal sensory data. We developed new solutions and combined them with existing models to efficiently enable autonomous driving scenario similarity search. Our main contributions are the following:
● We utilized a ViViT video transformer to enable similarity search based on spatiotemporal visual features.
● We developed an egomotion-based search that enables us to find scenarios with similar egomotion.
● We implemented an algorithm to utilize exo-trajectories for finding similar scenes based on the behavior of other objects in the scene.
● We implemented and trained a scalable, transformer-based similarity search method taking into account both the ego-vehicle and exo-vehicles behavior.
● We combined the above-mentioned methods to enhance their expressivity for finding similar scenarios to the target.

The ego-motion-based similarity search is not a well-explored area, especially not in the field of autonomous driving scenarios. The combination of ego / exo-trajectories and Transformers provides a method that differs from existing techniques.

Compared with current scenario encoders, our solution uses a more expressive input representation by distinguishing between different classes using size, focuses on scenario similarity search, and likely handles a broader perception range and more agents, offering a more detailed and versatile approach to scenario analysis. Furthermore, our solution can simplify position and size to 2D after BEV projection. Additionally, our solution considers velocity information, uses contrastive learning for training, and employs similarity search to find and compare similar scenarios.

The invention can be integrated into an annotation center where AI researchers can search for interesting scenarios. Furthermore, the proposed similarity search methods can be used to find interesting scenarios to be sent to manual annotation. The invention can also be licensed to customers as part of the annotation center.

It should be noted that the above description is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit", "module" or "system". Furthermore, aspects of the present disclosure may take the form of a computer program product embodied in one or more computer readable media having computer readable program code embodied thereon.

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A method for autonomous driving scenario similarity search, comprising:
obtaining multimodal data of a plurality of driving scenarios, wherein the multimodal data comprises any of video data, ego-motion data, and/or object representation data;
processing the multimodal data to obtain a plurality of contextual information, wherein the plurality of contextual information comprises one or more scenario features of each of the plurality of driving scenarios;
determining one or more similarity representations among the plurality of driving scenarios by comparing the plurality of contextual information; and
performing the autonomous driving scenario similarity search based on the one or more similarity representations.

2. The method of claim 1, wherein the multimodal data comprises the video data and the method comprises:
processing, by a transformer-based video model, the video data to obtain a plurality of first embedding vectors of the plurality of driving scenarios, wherein each of the plurality of first embedding vectors comprises one or more visual spatio-temporal features of the corresponding driving scenario; and
determining a first similarity representation of the plurality of driving scenarios based on the plurality of first embedding vectors.

3. The method of claim 2, before processing the video data, further comprising:
subsampling the video data; and
processing the video data to remove driving-irrelevant parts.

4. The method of any of claims 1 to 3, wherein the multimodal data comprises the ego-motion data, comprising:
processing the ego-motion data to obtain a plurality of ego-motion patterns of the plurality of driving scenarios, wherein the plurality of ego-motion patterns is determined according to an ego coordinate system; and
determining, by a time series comparison algorithm, a second similarity representation based on the plurality of ego-motion patterns.

5. The method of any of claims 1 to 4, wherein the multimodal data comprises the object representation data, comprising:
obtaining exo-trajectory data based on the object representation data;
processing one or more trajectories of one or more objects in one driving scenario of the plurality of driving scenarios, wherein the one or more trajectories are determined according to an ego coordinate system; and
determining, by a trajectory matching algorithm, a third similarity representation based on the one or more trajectories.

6. The method of claim 5, before processing the determining the third similarity representation, further comprising:
categorizing the one or more trajectories into a set of groups based on types of the one or more objects and/or movement patterns of the one or more objects.

7. The method of claim 6, the determining, by a trajectory matching algorithm, a third similarity representation based on the one or more trajectories comprising:
determining a distance matrix between each pair of the driving scenarios by comparing trajectories of objects, in the same group, of the pair driving scenarios, wherein the pair driving scenarios are any two driving scenarios of the plurality of driving scenarios;
determining, by the trajectory matching algorithm, an optimal matching of the pair driving scenarios based on the distance matrix;
calculating a similarity score between the pair driving scenarios based on the optimal matching; and
determining the third similarity representation based on the similarity scores of all pair driving scenarios of the plurality of driving scenarios.

8. The method of claim 7, further comprising:
introducing a penalty mapping to refine the optimal matching on a per-class basis.

9. The method of any of claims 1 to 8, wherein the multimodal data comprises the object representation data, comprising:
processing, by a transformer model, the object representation data to obtain a plurality of second embedding vectors of the plurality of driving scenarios, wherein the transformer model is trained by a contrastive learning method; and
determining a fourth similarity representation of the plurality of driving scenarios based on the plurality of second embedding vectors.

10. The method of claim 9, the processing, by a transformer model, the object representation data to obtain a plurality of second embedding vectors of the plurality of driving scenarios comprising:
obtaining a plurality of tensors based on the object representation data of any driving scenario, wherein a tensor represents trajectories of objects in the corresponding driving scenario;
projecting, by a linear layer of the transformer model, the plurality of tensors into a high-dimensional embedding space to obtain a plurality of high-dimensional tensors;
adding positional encoding to the plurality of high-dimensional tensors within transformer layers of the transformer model; and
producing, by the transformer model, a plurality of second embedding vectors of the plurality of driving scenarios based on the plurality of high-dimensional tensors with positional encoding.

11. The method of claims 9 or 10, the obtaining one or more tensors based on the object representation data of any driving scenario comprising:
processing, by a birds-eye-view, BEV, projection method, the object representation data before obtaining the one or more tensors.

12. The method of claims 9 to 11, wherein the training the transformer model by the contrastive learning method comprises:
obtaining a plurality of original training tensors of a plurality of original training driving scenarios based on training multimodal data;
generating a plurality of augmented training driving scenarios by augmenting the plurality of original training tensors;
determining positive pairs and negatives pairs, wherein the positive pairs is one original training driving scenario and its corresponding augmented training driving scenarios, and the negative pairs is the original training driving scenario with any other training driving scenario; and
training the transformer model by maximizing similarity within the positive pairs and minimizing similarity within the negative pairs.

13. The method of any of claims 1 to 12, wherein the plurality of driving scenarios is obtained from one or more sensors and/or a scenario editor.

14. The method of any of claims 1 to 13, wherein more than one similarity representations are determined, and the method further comprises:
combining the more than one similarity representations to obtain a fifth similarity representation; and
performing the autonomous driving scenario similarity search based on the fifth similarity representation.

15. A system for autonomous driving scenario similarity search, comprising:
a data obtaining module configured to obtain multimodal data of a plurality of driving scenarios, wherein the multimodal data comprises any of video data, ego-motion data, and/or object representation data;
a data processing module configured to process the multimodal data to obtain a plurality of contextual information, wherein the plurality of contextual information comprises one or more scenario features of each of the plurality of driving scenarios;
a similarity measure module configured to determine one or more similarity representations among the plurality of driving scenarios by comparing the plurality of contextual information; and
a similarity search module configured to perform the autonomous driving scenario similarity search based on the one or more similarity representations.
